# EUROPÄISCHE PATENTSCHRIFT

(11) **EP 0 272 465 B1**
(45) Veröffentlichungstag und Bekanntmachung des Hinweises auf die Patenterteilung: **24.02.1993**
(21) Anmeldenummer: 87117223.5
(22) Anmeldetag: 23.11.1987
(51) Int. Cl.: B01D 53/00, B01D 7/00, B01D 1/00, C22B 9/00, F23J 15/00, B01D 46/00, B01D 50/00

(54) **Verfahren und Vorrichtung zur Trennung und/oder Umsatz von Partikeln**
Process and device for the separation and/or reaction of particles
Procédé et dispositif pour la séparation et/ou réaction des particules

(30) Priorität: 10.12.1986 CH 4917/86
(43) Veröffentlichungstag der Anmeldung: 29.06.1988
(73) Patentinhaber: BBC Brown Boveri AG, CH-5401 Baden (CH)
(72) Erfinder: Hirth, Michael, Dr., CH-5035 Unterentfelden (CH); Wiegart, Norbert, Dr., CH-5400 Baden (CH)

(56) Entgegenhaltungen:
- EP-A- 0 274 037
- DE-A- 3 514 471
- FR-A- 1 140 652
- GB-A- 1 110 649
- US-A- 4 215 101

## Beschreibung

### TECHNISCHES GEBIET

Die Erfindung geht aus von einem Verfahren zur Trennung und zum Umsatz von Partikeln und von einer Vorrichtung zur Durchführung des Verfahrens. Insbesondere betrifft sie ein Verfahren zur Trennung und zum Umsatz von Partikeln, welche mindestens einen unterhalb einer ersten vorgegebenen Temperatur verdampfbaren ersten Stoff, mindestens einen unterhalb einer zweiten vorgegebenen Temperatur umsetzbaren zweiten Stoff und mindestens einen dritten Stoff aufweisen, bei welchem die Partikel gemeinsam mit einem strömenden gasförmigen Trägermedium in einer Aufheizeinrichtung auf die höchste beider vorgegebenen Temperaturen aufgeheizt werden, wobei aus dem mindestens einen verdampfenden ersten Stoff, aus Reaktionsprodukten des mindestens einen umgesetzten zweiten Stoffes, aus dem mindestens einen dritten Stoff und aus dem gasförmigen Trägermedium eine Mischung entsteht, welche anschliessend zumindest teilweise abgekühlt wird. Insbesondere betrifft sie ferner eine Vorrichtung zur Durchführung dieses Verfahrens mit einem Gebläse und mit einer mit einem Kühler mit einem mindestens einstufigen Staubabscheider, mit einem Heissgasfilter und mit einem Separator in Wirkverbindung stehenden, Aufheizeinrichtung.

### STAND DER TECHNIK

Aus der Zeitschrift "Journal of Hazardous Materials", Band 12 (1985), Seiten 143 bis 160, ist ein Verfahren zu Trennung und/oder Umsatz von Partikeln bekannt. Bei diesem Verfahren werden die Partikel, beispielsweise Elektrofilterstäube mit angelagerten Schwermetallverbindungen und angelagerten organischen Schadstoffen, gemeinsam mit einem gasförmigen Trägermedium auf vergleichsweise hohe Temperaturen aufgeheizt und in ihre Bestandteile zerlegt. Dabei verdampfen die angelagerten Schwermetallverbindungen, und die organischen Schadstoffe werden umgesetzt in vergleichsweise ungefährliche gasförmige und feste Verbindungen. Die verdampften Schwermetallverbindungen und die Reaktionsprodukte der umgesetzten organischen Schadstoffe bilden mit dem gasförmigen Trägermedium eine Mischung. Die festen Bestandteile werden aufgefangen und für die weitere Verarbeitung bzw. Deponierung entnommen. Aus der Mischung werden die restlichen festen Bestandteile abgeschieden und danach wird sie gewaschen und von Rückständen befreit. Am Ausgang der Waschanlage tritt noch verunreinigtes, gasförmiges Trägermedium aus, welches über einen Aktivkohlefilter abgeblasen wird.

Dieses Verfahren arbeitet mit sehr hohen Temperaturen, was zur Folge hat, dass auch Teile der Partikel schmelzen, was eine schlechte Energieausnutzung zur Folge hat. Zudem arbeitet es nicht in einem geschlossenen Kreislauf, so dass eine gewisse, unerwünschte Umweltbelastung nicht ausgeschlossen werden kann.

Zudem ist eine Patentschrift US-A-4 215 101 bekannt, welche ein Verfahren zur chemischen Behandlung von Stäuben zeigt. Bei diesem Verfahren wird schädliches Gas durch die Zugabe von pulverisiertem CaO unschädlich gemacht, wobei sich das CaO chemisch verändert.

Ferner ist aus der FR-A-1 140 652 ein Verfahren bekannt, welches Wirbelbetten benutzt. Bei diesem Verfahren werden Schadstoffe an Sand angelagert und danach wieder entfernt.

### Darstellung der Erfindung

Hier will die Erfindung Abhilfe schaffen. Die Erfindung, wie sie in den unabhängigen Ansprüchen gekennzeichnet ist, löst die Aufgabe, ein Verfahren zur Trennung und/oder Umsatz von Partikeln anzugeben, welches erlaubt, an die Partikel angelagerte Schadstoffe wirtschaftlich abzutrennen und/oder umzusetzen, ohne unkontrolliert Schadstoffreste an die Umgebung abzugeben, und eine Vorrichtung zur Durchführung dieses Verfahrens zu schaffen.

Die durch die Erfindung erreichten Vorteile sind im wesentlichen darin zu sehen, dass weniger Energie aufgewendet werden muss. Da das Verfahren mit vergleichsweise niederen Temperaturen arbeitet, können weniger temperaturbeständige und daher weniger aufwendige und kostengünstigere Komponenten in der erfindungsgemässen Vorrichtung eingesetzt werden. Ferner ist es von grossem Vorteil, dass geschlossene Kreisläufe auf jeden Fall verhindern, dass Schadstoffe unkontrolliert an die Umwelt abgegeben werden können.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnungen, welche lediglich einen Ausführungsweg darstellen, näher erläutert.

### KURZE BESCHREIBUNG DER ZEICHNUNGEN

Es zeigen:
- Fig. 1: ein Blockdiagramm des erfindungsgemässen Verfahrens,
- Fig. 2: eine erste schematische Darstellung einer erfindungsgemässen Vorrichtung, und
- Fig. 3: eine zweite schematische Darstellung einer erfindungsgemässen Vorrichtung.

Bei allen Figuren sind gleich wirkende Elemente mit gleichen Bezugszeichen versehen.

### WEGE ZUR AUSFÜHRUNG DER ERFINDUNG

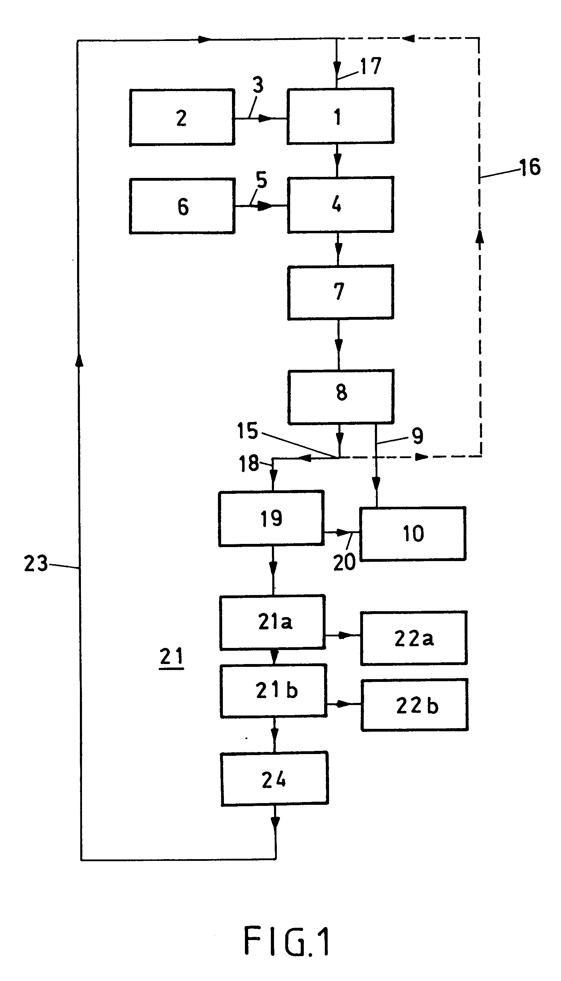

Das Blockdiagramm in Fig. 1 zeigt das Zusammenwirken der verschiedenen, für das Verfahren wichtigen Komponenten. Ein Gebläse 1 hält die Strömung eines gasförmigen Trägermediums aufrecht. Dieses Trägermedium kann ein oxidierendes oder ein reduzierendes Gas enthalten oder es kann aus einem inerten Gas bestehen. Von einem Reservebehälter 2 her können über eine Verbindung 3 gesteuert etwaige Verluste des Trägermediums ersetzt werden. Der Strom des Trägermediums führt vom Gebläse 1 in einen Mischer 4, welcher beispielsweise als Kreisel- oder Schnellmischer ausgebildet ist. In diesen Mischer 4 wird auch der Auslass 5 eines Beschickungsbunkers 6 eingeführt, der mit Partikeln gefüllt ist. Im Mischer 4 werden die Partikel dosiert mit dem strömenden gasförmigen Trägermedium zu einem fluidisierten Gemenge vermischt, welches in eine Aufheizeinrichtung 7 strömt. In einem Wirbelbett dieser Aufheizeinrichtung 7 verdampft ein erster Teil der Bestandteile der Partikel, während ein zweiter Teil der Bestandteile der Partikel in Gase und in feste Bestandteile umgesetzt wird, und ein dritter Teil dieser Stoffe als feste Bestandteile erhalten bleibt. Diese drei Teile bilden gemeinsam mit dem Trägermedium eine Mischung, welche die Aufheizeinrichtung 7 verlässt. Diese Mischung wird in einen Staubabscheider 8 geleitet, in welchem die überwiegende Menge der verbliebenen festen Bestandteile der Mischung abgeschieden und durch eine Leitung 9 in einen Staubsilo 10 geführt wird. Der aus dem Staubabscheider 8 austretende verbleibende Teil der Mischung, mit einem geringen Anteil von Resten der festen Bestandteile der Mischung, wird zu einer Verzweigung 15 geführt. Bei dieser Verzweigung 15 wird ein erster Teil dieses verbleibenden Teils der Mischung abgezweigt und durch eine Leitung 16 als ein Umlaufstrom rückgeführt zu einem Eingang 17 des Gebläses 1. Ein zweiter Teil dieses verbleibenden Teils der Mischung wird durch die Leitung 18 in einen Heissgasfilter 19 geführt und dort von den Resten der festen Bestandteile befreit. Die abgeschiedenen Reste der festen Bestandteile werden durch eine Leitung 20 in den Staubsilo 10 eingebracht. Der verbleibende Teil der Mischung wird nach dem Heissgasfilter 19 in einen Kuhler 21 eingeleitet, welcher verschiedene Stufen 21a, 21b aufweisen kann mit unterschiedlichen Niveaus der Kühltemperatur. Die verdampften Bestandteile der Partikel kondensieren entsprechend ihren spezifischen Kondensationstemperaturen in den jeweiligen Stufen 21a, 21b des Kühlers aus und werden in zugeordneten Sammlern 22a, 22b aufgefangen. Der abgekühlte, verbleibende Teil der Mischung verlässt den Kühler 21, tritt in einen Separator 24 ein und wird durch eine Leitung 23 rückgeführt in den Eingang 17 des Gebläses 1.

Bei diesem Blockdiagramm nach Fig. 1 kann die Leitung 16 für den Umlaufstrom auch entfallen bzw. abgeschaltet werden, wenn die Zusammensetzung der Partikel dies erlaubt.

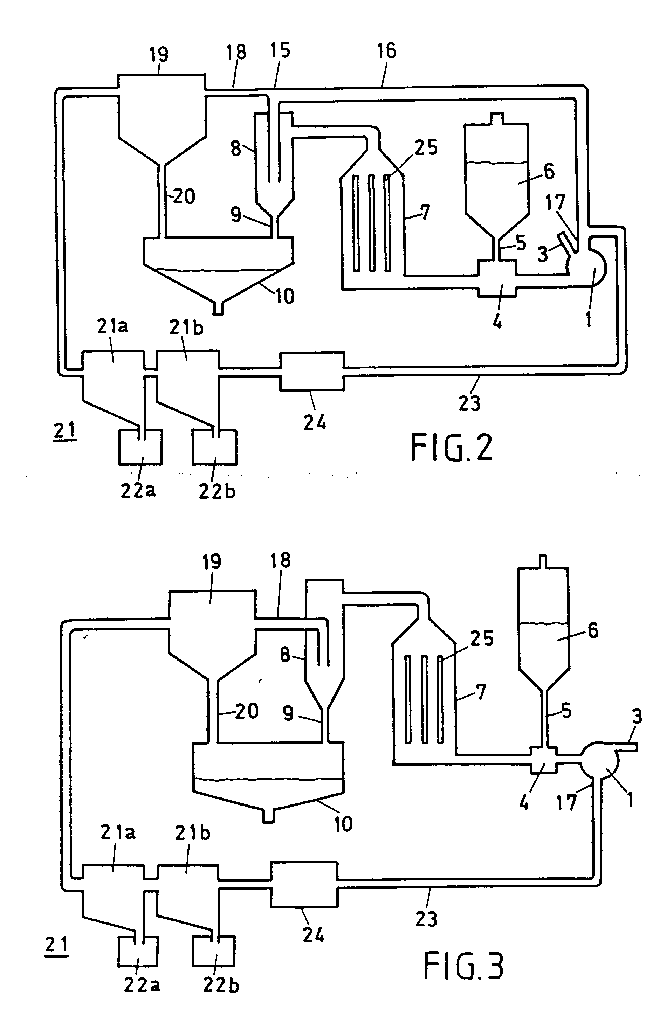

In Fig. 2 ist die Vorrichtung, welche entsprechend dem Blockdiagramm in Fig. 1 arbeitet, dargestellt. Dabei sind Steuer-, Regel- und Dosiereinrichtungen, Sensoren, Einfüll-, Entnahme- und Absperrorgane, usw., die zwangsläufig vorhanden sein müssen, in diese schematische Darstellung nicht eingezeichnet. Ferner sind auch Wärmeisolierungen, welche die gesamte Vorrichtung ausser den Kühler 21 und den Separator 24 einschliessen, weggelassen worden. Die Verbindung 3 zum Reservebehälter 2 ist nur angedeutet. In der Aufheizeinrichtung 7 sind Heizelemente 25 angegeben, welche das fluidisierte, nach oben steigende Gemenge aufheizen. Die Heizelemente 25 können elektrisch aufgeheizt werden oder beispielsweise auch vorteilhaft durch Prozesswärme, wie sie in einer Müllverbrennung, in Kraftwerken oder Zementfabriken anfällt. Die Aufheiztemperatur kann von einigen 100 °C bis in den Bereich von etwa 1200 °C bis 1400 °C gewählt und angepasst werden, je nachdem, welche Bestandteile der Partikel verdampft werden sollen. Ferner ist denkbar, dass ein vom Gemenge durchströmter Plasmabrenner als Wärmequelle eingesetzt wird. Die Aufheizeinrichtung 7 ist so gestaltet, dass in ihr das fluidisierte Gemenge ein Wirbelbett bildet. Auf diese Art wird erreicht, dass dieses Gemenge die Aufheizeinrichtung 7 kontrolliert von unten nach oben durchströmt, so dass auch alle Partikel gleichmässig erwärmt werden. Die mittlere Verweildauer der Partikel im Wirbelbettbereich lässt sich der jeweiligen Zusammensetzung der Partikel anpassen.

Der Staubabscheider 8 wird vorteilhaft als ein- oder mehrstufiger Zyklon gestaltet. Zwischen Aufheizeinrichtung 7, dem Staubabscheider 8 und dem Heissgasfilter 19 darf kein Temperaturgefälle auftreten, damit sich einerseits die verdampften Bestandteile des ersten Teiles nicht wieder an die Partikel anlagern können und damit sich andererseits die umgesetzten Bestandteile des zweiten Teiles nicht rückbilden und sich dann erneut mit den verbliebenen Partikeln verbinden können. Nach diesem Staubabscheider 8 wird bei der Verzweigung 15 durch die Leitung 16 in der Regel der überwiegende Teil der in der Aufheizeinrichtung 7 entstandenen Mischung als ein Umlaufstrom rückgeführt zum Gebläse 1 und wird dort wieder als Teil des Trägermediums in den Kreislauf eingespeist. Durch die Leitung 18 wird der verbleibende Teil der Mischung in den Heissgasfilter 19 geführt, der beispielsweise als elektrostatischer Filter oder als Keramikwabenfilter ausgebildet sein kann. In diesem Heissgasfilter 19 werden die Reste der festen Bestandteile aus dem verbleibenden Teil der Mischung entfernt. Dieser verbleibende Teil der Mischung wird dann in den Kühler 21 eingeleitet und in verschiedenen Stufen 21a, 21b abgekühlt. Die Niveaus der Kühltemperatur werden so gewählt, dass auf jedem Niveau eine bestimmte Fraktion des verbleibenden Teiles der Mischung kondensiert und flüssig in den jeweiligen Sammler 22a, 22b, abgeführt wird. Je nach Zusammensetzung des verbleibenden Teiles der Mischung können auch unterschiedliche Niveaus der Kühltemperatur eingestellt werden. Der Kühler 21 kühlt den verbleibenden Teil der Mischung soweit ab, bis die relevanten verdampften Stoffe kondensiert und abgeführt sind. Der aus dem Kühler 21 austretende abgekühlte, verbleibende Teil der Mischung wird in einen Separator 24 geleitet. In diesem Separator 24 können, falls nötig, von der Umsetzung herrührende Schadstoffe unschädlich gemacht werden. Hier ist beispielsweise eine Wäsche des abgekühlten, verbleibenden Teiles der Mischung denkbar oder eine Umsetzung der Schadstoffe mit Hilfe von Katalysatoren, auch eine Kombination beider Möglichkeiten könnte angewendet werden. Der aus dem Separator 24 austretende abgekühlte, verbleibende Teil der Mischung, welcher noch Restwärme aufweisen kann, wird zum Gebläse 1 zurückgeführt und dort wieder in den Kreislauf eingespeist.

Sollten nur geringe Spuren beispielsweise eines Schwermetalls vorhanden sein, so erweisen sich diese geschlossenen Kreisläufe als besonders vorteilhaft, da sich das betreffende Schwermetall in diesen Kreisläufen soweit anreichern kann, bis ein Kondensieren desselben möglich wird.

In Fig. 3 ist eine Vorrichtung dargestellt, bei welcher nach dem Abscheiden der überwiegenden Menge der festen Bestandteile der Mischung der gesamte verbleibende Teil der Mischung von Resten der festen Bestandteile der Mischung befreit und danach gesamthaft abgekühlt wird. Diese Vorrichtung geht aus dem Blockdiagramm nach Fig. 1 hervor, wenn die Leitung 16 für den Umlaufstrom weggelassen wird. Alle übrigen Elemente funktionieren gleich wie bei der Vorrichtung entsprechend Fig. 2, allerdings müssen hier der Heissgasfilter 19, der Kühler 21 und der Separator 24 grössere Dimensionen aufweisen bzw. leistungsstärker ausgelegt sein, wenn die Vorrichtung mit gleichen Mengen von Partikeln beschickt wird. Der Vorteil dieser Vorrichtung ist darin zu sehen, dass wenig verunreinigte Partikel rasch und in grossen Mengen gereinigt werden können.

Je nach Zusammensetzung der zu verarbeitenden Partikel kann es sinnvoll sein, das gasförmige Trägermedium unter Normal-, Ueber- oder Unterdruck zu halten und damit gleichzeitig die gesamte Vorrichtung unter den jeweils günstigsten Druckverhältnissen arbeiten zu lassen. Dies bedingt natürlich entsprechende konstruktive Vorkehrungen, wie z.B. druckdichte Schleusen am Auslass 5 des Beschickungsbunkers 6, am Auslass des Staubsilos 10 und den Auslässen der einzelnen Stufen 21a, 21b des Filters 21. Ferner muss die gesamte Vorrichtung entsprechend druckdicht ausgelegt sein. Es ist aber auch vorstellbar den Kühler 21 allein unter Ueberdruck zu betreiben, um einen Kondensationsvorgang zu ermöglichen, was den Einbau eines entsprechenden Kompressors bedingen würde.

Das gasförmige Trägermedium kann, abgestimmt auf die zu verarbeitenden Partikel, ein oxidierendes oder ein reduzierendes Gas enthalten, ebenso wie es aus einem inerten Gas oder Gasgemisch bestehen kann. Wird ein oxidierendes oder ein reduzierendes Gas als Trägermedium oder als Zusatz zu diesem eingesetzt, so wird vorteilhaft in der Leitung 23 eine Möglichkeit vorgesehen, welche erlaubt, das oxidierende oder das reduzierende Gas zu regenerieren. Wird die Vorrichtung entsprechend Fig. 2 eingesetzt, so kann eventuell auch in der Leitung 16 eine derartige Regenerationsmöglichkeit vorgesehen werden.

Die Durchführbarkeit des geschilderten Verfahrens wurde durch Versuche bestätigt. Als Partikel wurde Staub aus dem Filtersystem einer Müllverbrennungsanlage mit u.a. 0,2 % Cadmiumgehalt und 3,25 % Bleigehalt in dem Mischer 4 mit dem Trägermedium Stickstoff zu einem fluidisierten Gemenge vermischt. Die Strömungsgeschwindigkeit dieses Gemenges in der Aufheizeinrichtung 7 wurde auf ca. 50 cm/s eingestellt. In der Aufheizeinrichtung 7 wurden 1200 °C als Temperatur des Gemenges gemessen, und es wurde eine Mindestverweildauer von 2,4 Sekunden bei dieser Temperatur festgestellt. Der aus dem Staubabscheider 8 und dem Heissgasfilter 19 entnommene gereinigte Staub wies keine nachweisbaren Mengen Cadmium auf und der Bleianteil war kleiner als 0,05 %. Die nachgewiesenen, vergleichsweise hohen Temperaturen und auch die nachgewiesene Mindestverweildauer genügen für die sichere chemische Umsetzung von organischen Schadstoffen, wie z.B. Dioxine oder Furane, in ungefährliche, bzw. problemlos unschädlich zu machende Verbindungen. Der eingespeiste Staub aus dem Filtersystem einer Müllverbrennungsanlage wies mit grosser Wahrscheinlichkeit Spuren von Dioxin auf, welche mit diesem Verfahren einfach und sicher unschädlich gemacht worden sind.

Obiges Ausführungsbeispiel zeigt deutlich, dass die bei einer Müllverbrennungsanlage anfallenden Filterstäube von gefährlichen Schadstoffen und Umweltgiften befreit und danach problemlos in Deponien gelagert oder für Bauzwecke eingesetzt werden können. Das in Sondermülldeponien zu lagernde oder anderweitig unschädlich zu machende Abfallvolumen einer derartigen Anlage kann damit wesentlich reduziert werden, was grosse wirtschaftliche und ökologische Vorteile mit sich bringt. Ferner kann auch vorgetrockneter und pulverisierter Klärschlamm nach diesem Verfahren sicher und wirtschaftlich von Schadstoffen befreit werden.

## Patentansprüche

1. Verfahren zur Trennung und zum Umsatz von Partikeln, welche mindestens einen unterhalb einer ersten vorgegebenen Temperatur verdampfbaren ersten Stoff, mindestens einen unterhalb einer zweiten vorgegebenen Temperatur umsetzbaren zweiten Stoff und mindestens einen dritten Stoff aufweisen, bei welchem die Partikel gemeinsam mit einem strömenden gasförmigen Trägermedium in einer Aufheizeinrichtung (7) auf die höchste beider vorgegebenen Temperaturen aufgeheizt werden, wobei aus dem mindestens einen verdampfenden ersten Stoff, aus Reaktionsprodukten des mindestens einen umgesetzten zweiten Stoffes, aus dem mindestens einen dritten Stoff und aus dem gasförmigen Trägermedium eine Mischung entsteht, welche anschliessend zumindest teilweise abgekühlt wird, dadurch gekennzeichnet,
- dass die Partikel und das gasförmige Trägermedium vor dem gemeinsamen Eintritt in die Aufheizeinrichtung (7) dosiert zu einem fluidisierten Gemenge vermischt werden,
- dass das fluidisierte Gemenge in einem Wirbelbett der Aufheizeinrichtung (7) auf die höchste beider vorgegebenen Temperaturen aufgeheizt wird,
- dass in der beim Aufheizen entstandenen Mischung der mindestens eine dritte Stoff in Partikelform erhalten bleibt,
- dass unmittelbar nach dem Austreten der Mischung aus der Aufheizeinrichtung (7), ehe eine Abkühlung derselben erfolgen kann, die überwiegende Menge der in Partikelform vorhandenen Bestandteile der Mischung abgeschieden wird, und
- dass danach der verbleibende Teil der Mischung in mindestens einem geschlossenen Kreislauf weitergeleitet wird.

2. Verfahren nach Anspruch 1, dadurch gekennzeichnet,
- dass der verbleibende Teil der Mischung von Resten der in Partikelform vorhandenen Bestandteile der Mischung befreit und danach in Stufen abgekühlt wird, und
- dass der abgekühlte verbleibende Teil der Mischung rückgeführt und dem Trägermedium zugegeben wird.

3. Verfahren nach Anspruch 1, dadurch gekennzeichnet,
- dass nach dem Abscheiden der überwiegenden Menge der in Partikelform vorhandenen Bestandteile der Mischung von dem verbleibenden Teil der Mischung ein erster Anteil als ein Umlaufstrom abgezweigt, rückgeführt und dem Trägermedium zugegeben wird, und
- dass ein zweiter Anteil des verbleibenden Teils der Mischung von Resten der in Partikelform vorhandenen Bestandteile der Mischung befreit und danach in Stufen abgekühlt wird, und
- dass danach der abgekühlte zweite Anteil rückgeführt und dem Trägermedium beigemischt wird.

4. Verfahren nach einem der Ansprüche 1 bis 3, dadurch gekennzeichnet,
- dass das gasförmige Trägermedium zumindestens teilweise ein oxidierendes oder reduzierendes Gas enthält, welches bei der Umsetzung des zweiten Stoffes mit diesem reagiert.

5. Verfahren nach einem der Ansprüche 1 bis 3, dadurch gekennzeichnet,
- dass die Mischung zumindest während des Abkühlens mit einem so hohen Druck beaufschlagt wird, dass eine Verflüssigung des mindestens einen verdampften ersten Stoffes möglich ist.

6. Verfahren nach einem der Ansprüche 1 bis 3, dadurch gekennzeichnet,
- dass die abgekühlte Mischung durch eine Wäsche und/oder mittels Katalysatoren von Schadstoffen befreit wird.

7. Vorrichtung zur Durchführung des Verfahrens gemäss Anspruch 1, mit einem Gebläse (1) und mit einer, mit einem Kühler (21), mit einem mindestens einstufigen Staubabscheider (8), mit einem Heissgasfilter (19) und mit einem Separator (24) in Wirkverbindung stehenden, Aufheizeinrichtung (7), dadurch gekennzeichnet,
- dass zwischen dem Gebläse (1) und der Aufheizeinrichtung (7) ein Mischer (4) für die dosierte Vermischung von Partikeln mit einem strömenden gasförmigen Trägermedium zu einem fluidisierten Gemenge vorgesehen ist,
- dass unmittelbar nach der Aufheizeinrichtung (7) ein mindestens einstufiger Staubabscheider (8) vorgesehen ist, und
- dass die Vorrichtung als geschlossenes System ausgebildet ist.

8. Vorrichtung nach Anspruch 7, dadurch gekennzeichnet,
- dass das Innere der Aufheizeinrichtung (7) so gestaltet ist, dass die Ausbildung eines Wirbelbettes begünstigt wird, und
- dass Mittel vorgesehen sind, um die Aufheiztemperatur des Wirbelbettes ebenso wie die mittlere Verweildauer des jeweiligen aufzuheizenden Gemenges im Wirbelbett an das jeweilige Gemenge anzupassen.

9. Vorrichtung nach Anspruch 8, dadurch gekennzeichnet,
- dass der Auslass des mindestens einstufigen Staubabscheiders (8) als Verzweigung (15) ausgebildet ist,
- dass von dieser Verzweigung (15) mindestens zwei Leitungen (16, 18) abgehen,
- dass eine erste (16) der mindestens zwei Leitungen (16, 18) als Rückführung zum Gebläse (1) ausgelegt ist,
- dass eine zweite (18) der mindestens zwei Leitungen (16, 18) mit dem Heissgasfilter (19) in Verbindung steht,
und
- dass dem Heissgasfilter (19) der stufenförmig ausgebildete Kühler (21) und der Separator (24) nachgeschaltet sind mit einem Auslass, der über eine Leitung (23) mit dem Gebläse (1) in Wirkverbindung steht.

10. Vorrichtung nach Anspruch 8, dadurch gekennzeichnet,
- dass dem Auslass des mindestens einstufigen Staubabscheiders (8) mindestens ein Heissgasfilter (1) unmittelbar nachgeschaltet ist, und
- dass dem Heissgasfilter (19) der stufenförmig ausgebildete Kühler (21) und der Separator (24) nachgeschaltet sind mit einem Auslass, der über eine Leitung (23) mit dem Gebläse (1) in Wirkverbindung steht.

## Claims

1. Process for separating and reacting particles which contain at least one first substance vaporisable below a given temperature, at least one second substance which can be reacted below a second given temperature and at least one third substance, the particles being heated in a heating device (7) together with a flowing gaseous carrier medium to the highest of the two given temperatures, the vaporising first substance, of which there is at least one, reaction products of the converted second substance, of which there is at least one, the third substance, of which there is at least one, and the gaseous carrier medium forming a mixture which is then at least partially cooled, characterised in that:
- in that the particles and the gaseous carrier medium are mixed, before their joint entry into the heating device (7), at controlled rates to give a fluidised blend,
- in that the fluidised blend is heated in a fluidised bed of the heating device (7) to the highest of the two given temperatures,
- in that the third substance, of which there is at least one, remains in the form of particles in the mixture formed on heating,
- in that immediately after the mixture has left the heating device (7), before cooling of the mixture can take place, the predominant quantity of the mixture constituents present in the form of particles is precipitated, and
- in that the remaining part of the mixture is then passed forward in at least one closed circulation.

2. Process according to Claim 1, characterised in that
- the remaining part of the mixture is freed of residues of the mixture constituents present in the form of particles and is then cooled in stages, and
- the cooled, remaining part of the mixture is recycled and added to the carrier medium.

3. Process according to Claim 1, characterised in that
- after the predominant quantity of the mixture constituents present in the form of particles has been precipitated, a first portion of the remaining part of the mixture is branched off as a circulating stream, recycled and added to the carrier medium,
- a second portion of the remaining part of the mixture is freed of residues of the mixture constituents present in the form of particles and then cooled in stages, and
- the cooled second portion is then recycled and admixed to the carrier medium.

4. Process according to any of Claims 1 to 3, characterised in that
- the gaseous carrier medium at least partially contains an oxidising or reducing gas which reacts with the second substance during the conversion of the latter.

5. Process according to any of Claims 1 to 3, characterised in that
- the mixture is, at least during cooling, subjected to such a high pressure that liquefaction of the vaporised first substance, of which there is at least one, is possible.

6. Process according to any of Claims 1 to 3, characterised in that
- the cooled mixture is freed of pollutants by means of a wash and/or by means of catalysts.

7. Apparatus for carrying out the process according to Claim 1, having a fan (1) and a heating device (7) which is operatively connected to a cooler (21), a dust precipitator (8) with at least one stage, a hot-gas filter (19) and a separator (24), characterised in that
- a mixer (4) for mixing, at a controlled rate, particles with a flowing gaseous carrier medium to give a fluidised blend is provided between the fan (1) and the heating device (7),
- a dust precipitator (8) having at least one stage is provided immediately downstream of the heating device (7), and
- the apparatus is designed as a closed system.

8. Apparatus according to Claim 7, characterised in that
- the interior of the heating device (7) is of such a design that the formation of a fluidised bed is promoted, and
- means are provided for adapting the heating temperature of the fluidised bed and also the mean residence time of the particular blend, which is to be heated, in the fluidised bed to the particular blend.

9. Apparatus according to Claim 8, characterised in that
- the outlet of the dust precipitator (8) having at least one stage is constructed as a branch (15),
- at least two lines (16, 18) start from this branch (15),
- a first line (16) of the lines, of which there are at least two (16, 18), is designed as a recycle line to the fan (1),
- a second line (18) of the lines, of which there are at least two (16, 18), is connected to a hot-gas filter (19), and
- the cooler (21) of stagewise design and the separator (24) are provided downstream of the hot-gas filter (19), with an outlet which is operatively connected via a line (23) to the fan (1).

10. Apparatus according to Claim 8, characterised in that
- at least one hot-gas filter (1) [sic] is provided immediately downstream of the outlet of the dust precipitator (8) having at least one stage, and
- the cooler (21) of stagewise design and the separator (24) are provided downstream of the hot-gas filter (19), with an outlet which is operatively connected via a line (23) to the fan (1).

## Revendications

1. Procédé pour la séparation et la conversion de particules qui comprennent au moins une première matière vaporisable en dessous d'une première température prédéterminée, au moins une deuxième matière convertissable en dessous d'une deuxième température prédéterminée et au moins une troisième matière, dans lequel les particules sont chauffées à la plus haute des deux températures prédéterminées en même temps qu'un agent porteur gazeux en circulation, dans un dispositif de chauffage (7), où il se forme à partir de la au moins une première matière vaporisable, à partir des produits de réaction de la au moins une deuxième matière convertie, à partir de la au moins une troisième matière et à partir de l'agent porteur gazeux, un mélange qui est finalement refroidi au moins partiellement, caractérisé en ce que
- les particules et l'agent porteur gazeux sont mélangés en quantités dosées en un mélange fluidisé avant leur introduction commune dans le dispositif de chauffage (7), en ce que
- le mélange fluidisé est chauffé dans un lit fluidisé du dispositif de chauffage (7) à la plus haute des deux températures prédéterminées, en ce que
- dans le mélange obtenu par le chauffage, la au moins une troisième matière reste sous la forme de particules, en ce que
- immédiatement après la sortie du mélange du dispositif de chauffage (7), et avant qu'il puisse se produire un refroidissement de celui-ci, la majeure partie des constituants du mélange présents sous la forme de particules est précipitée, et en ce que
- la partie restante du mélange est ensuite envoyée dans au moins un circuit fermé.

2. Procédé suivant la revendication 1, caractérisé en ce que
- la partie restante du mélange est débarrassée des résidus des constituants du mélange présents sous la forme de particules et est ensuite refroidie par étages, et en ce que
- la partie restante refroidie du mélange est recyclée et ajoutée à l'agent porteur.

3. Procédé suivant la revendication 1, caractérisé en ce que
- après la séparation de la majeure partie des constituants du mélange présents sous la forme de particules, une première fraction de la partie restante du mélange est déviée en guise de courant de retour, recyclée et ajoutée à l'agent porteur, et en ce que
- une deuxième fraction de la partie restante du mélange est débarrassée des résidus des constituants du mélange présents sous la forme de particules et est ensuite refroidie par étages, et en ce que
- la deuxième fraction refroidie est ensuite recyclée et mélangée à l'agent porteur.

4. Procédé suivant l'une ou l'autre des revendications 1 à 3, caractérisé en ce que
- l'agent porteur gazeux contient au moins partiellement un gaz oxydant ou un gaz réducteur, qui réagit avec la deuxième matière lors de la conversion de celle-ci.

5. Procédé suivant l'une ou l'autre des revendications 1 à 3, caractérisé en ce que
- le mélange est soumis, au moins pendant le refroidissement, à une pression d'une valeur telle qu'une liquéfaction de la au moins une première matière vaporisée est possible.

6. Procédé suivant l'une ou l'autre des revendications 1 à 3, caractérisé en ce que
- le mélange refroidi est débarrassé des polluants par un lavage et/ou au moyen de catalyseurs.

7. Dispositif pour la mise en oeuvre du procédé suivant la revendication 1, avec une soufflante (1) et avec un dispositif de chauffage (7) qui est en communication effective avec un refroidisseur (21), avec un séparateur de poussières (8) à au moins un étage, avec un filtre à gaz chaud (19) et avec un séparateur (24), caractérisé en ce que
- entre la soufflante (1) et le dispositif de chauffage (7), il est prévu un mélangeur (4) pour mélanger en quantités dosées des particules avec un agent porteur gazeux en circulation en vue de former un mélange fluidisé, en ce que
- immédiatement après le dispositif de chauffage (7) il est prévu un séparateur de poussières (8) à au moins un étage, et en ce que
- le dispositif constitue un système fermé.

8. Dispositif suivant la revendication 7, caractérisé en ce que
- l'intérieur du dispositif de chauffage (7) est constitué de façon à favoriser la formation d'un lit fluidisé, et en ce que
- il est prévu des moyens pour adapter la température de chauffage du lit fluidisé ainsi que la durée moyenne de séjour de chaque mélange à chauffer dans le lit fluidisé à chacun de ces mélanges respectifs.

9. Dispositif suivant la revendication 8, caractérisé en ce que
- la sortie du séparateur de poussières (8) à au moins un étage présente une déviation (15), en ce que
- de cette déviation (15) partent au moins deux conduites (16, 18), en ce que
- une première (16) des au moins deux conduites (16, 18) constitue un retour vers la soufflante (1), en ce que
- une deuxième (18) des au moins deux conduites (16, 18) est en communication avec le filtre à gaz chaud (19), et en ce que
- après le filtre à gaz chaud (19) sont raccordés le refroidisseur étagé (21) et le séparateur (24) avec une sortie qui est en communication effective avec la soufflante (1) par une conduite (23).

10. Dispositif suivant la revendication 8, caractérisé en ce que
- immédiatement à la sortie du séparateur de poussières (8) à au moins un étage est raccordé au moins un filtre à gaz chaud (19), et en ce que
- après le filtre à gaz chaud (19) sont raccordés le refroidisseur étagé (21) et le séparateur (24) avec une sortie qui est en communication effective avec la soufflante (1) par une conduite (23).
